Europäisches Patentamt

European Patent Office

Office européen des brevets

(19)

(11) Numéro de publication: **0 038 258**
**B1**

(12) **FASCICULE DE BREVET EUROPEEN**

(45) Date de publication du fascicule du brevet: **18.07.84**

(51) Int. Cl.³: **G 01 F 1/32**

(21) Numéro de dépôt: **81400571.6**

(22) Date de dépôt: **10.04.81**

(54) Perfectionnements aux appareils de mesure de débit à émission de tourbillons.

(30) Priorité: **11.04.80 FR 8008117**

(43) Date de publication de la demande:
**21.10.81 Bulletin 81/42**

(45) Mention de la délivrance du brevet:
**18.07.84 Bulletin 84/29**

(84) Etats contractants désignés:
**DE GB IT NL**

(56) Documents cités:
**DE - A - 2 832 378**
**US - A - 3 965 730**

(73) Titulaire: **SOCIETE FLONIC**
**12, Place des Etats-Unis**
**F-92541 Montrouge (FR)**

(72) Inventeur: **Mollet, Jean-Paul**
**47, Elysée 2**
**F-78170 La Celle-Saint-Cloud (FR)**

(74) Mandataire: **Dronne, Guy et al,**
**Giers Schlumberger 12 Place des Etats-Unis**
**F-92124 Montrouge (FR)**

**Le dossier contient des informations techniques présentées postérieurement au dépôt de la demande et ne figurant pas dans le présent fascicule.**

Courier Press, Leamington Spa, England.

# Description

La présente invention est relative à des dispositifs pour la mesure de débit de fluides du type à émission de tourbillons, dans lesquels un obstacle placé dans la conduite parcourue par le fluide à mesurer engendre l'émission périodique de tourbillons dont la fréquence est représentative de la vitesse du fluide.

Dans ce type de débitmètre, la fréquence d'émission des tourbillons est en effet liée à la vitesse locale d'écoulement du fluide et la mesure de cette fréquence permet d'en déduire le débit du fluide dans la conduite. Cette mesure de fréquence s'effectue au moyen de capteurs sensibles à l'émission ou au passage des tourbillons et capables de détecter les variations de pression locales qui accompagnent leur émission.

L'obstacle est généralement choisi de section droite rectangulaire et disposé transversalement de façon symétrique sur l'axe de la conduite. Dans une large gamme de débits, le nombre de Strouhals

$$S = \frac{f.d}{V}$$

où: f désigne la fréquence des tourbillons,

d la dimension transversale de la section droite de l'obstacle, c'est-à-dire perpendiculairement à l'écoulement du fluide,

V la vitesse du fluide,

reste constant; autrement dit, la fréquence des tourbillons est bien proportionnelle à la vitesse du fluide. Mais on a constaté que pour un nombre de Reynolds sur l'obstacle R—20 000, c'est-à-dire par exemple pour de faibles débits de gaz à basse pression, la valeur de la fréquence moyenne des tourbillons émis était plus élevée que la valeur théorique tirée de la relation précédente. Il en résulte que la courbe d'erreur du débitmètre tracée en fonction du débit, très plate pour des pression de gaz supérieures à 4 bars environ, remonte de plusieurs % aux faibles valeurs du débit, indiquant un surcomptage quand la pression du gaz à mesurer est plus basse.

Cette anomalie est, en particulier, très gênante pour l'étalonnage du débitmère quand il est appliqué au comptage de gaz, car le compteur débitmétrique doit généralement être étalonné sous pression atmosphérique alors qu'il sera ultérieurement utilisé pour le comptage de gaz sous pression

L'analyse du signal du débitmètre à l'aide d'un analyseur de spectre permet de vérifier que la remontée des courbes d'erreur dans ces conditions n'est pas liée à l'apparition de parasites, mais résulte plutôt d'une anomalie inhérente à la nature de l'écoulement tourbillonnaire.

Pour diminuer l'erreur propre à ce genre de débitmère aux basses pressions de fluide, DE—A—28 32 378 propose de placer en amont de l'obstacle générateur de tourbillons un tamis ou treileis de fils ronds dont la largeur de maille est très réduite, de l'ordre de 0,43 mm. Cependant ce type de structure maillée ne donne pas des résultats très satisfaisants.

Suivant l'invention, l'appareil pour le mesure débit de fluide du type à émission de tourbillons comporte dans une conduite de diamètre D parcourue par le fluide dans un sens donné, un obstacle générateur de tourbillons précédé en amont par une structure maillée disposée selon une section droite de ladite conduite à une distance L dudit obstacle, et il est caractérisé en ce que la structure est constituée par une grille formée par des barreaux dont la section droite est rectangulaire ou carré et présente une dimension transversale orthogonale à l'axe de la conduite et une dimension longitudinale parallèle à l'axe de ladite conduite, ladite dimension transversale étant de l'ordre de 0,013D et le rapport entre lesdites dimensions longitudinale et transversale étant compris entre 1 et 1,7, lesdits barreaux formant des mailles sensiblement carrées dont le pas est de l'ordre de 0,08D, ladite distance L étant comprise entre D et 5D.

Par "grille" on entend une structure définie de barreaux assemblés pour former des mailles rectangulaires ou carrées, dont le rôle consiste essentiellement à agir sur l'écoulement du fluide dans une zone d'action en amont de l'obstacle pour homogénéiser le niveau de turbulence du fluide et atténuer les irrégularités du profil des vitesses d'écoulement pouvant résulter d'imperfections des parois de la conduite.

Il est à préciser qu'une telle grille a une structure et un rôle totalement différents de eux d'un "tranquiliseur", par exemple du type à faisceau de tubes ou à nids d'abeille, servant uniquement à éliminer les composantes de vitesse de l'écoulement non axiales, et qu'il s'agit d'un élément du genre utilisé habituellement à l'entrée d'une soufflerie pour conditionner l'écoulement d'air avant son passage autour de maquettes en essais.

L'utilisation d'une grille adaptée de façon spécifique à un obstacle générateur de tourbillons présente, outre l'avantage signalé précédemment d'améliorer la courbe d'erreur de l'appareil de mesure aux faibles nombres de Reynolds, les avantages supplémentaires de diminuer les irrégularités sur la courbe d'erreur dans toute l'étendue de mesure du dispositif et d'obtenir des signaux résultants beaucoup plus purs que ceux obtenus en l'absence de grille, en raison de la stabilité de l'écoulement procurée.

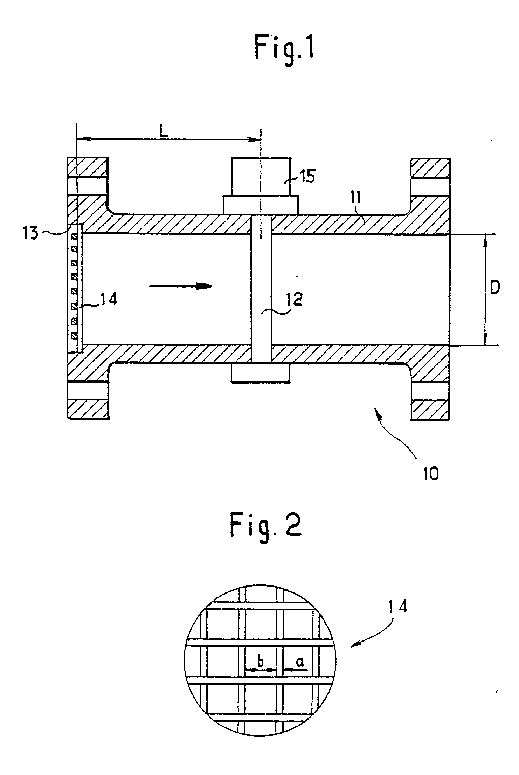

L'invention sera mieux comprise en se référant à la description suivante et au dessin annexé qui représente, à titre d'exemple non limitatif, un mode de réalisation préféré conforme à l'invention. Sur ce dessin, la fig. 1 est une vue en coupe axiale d'un appareil suivant l'invention; la fig. 2 représente, à plus grande échelle, une fraction du maillage de la grille utilisée dans la fig. 1.

L'appareil de mesure de débit 10, représenté schématiquement à la fig. 1, comporte dans une section de conduite ou manchette 11, de diamètre D, munie de brides à ses extrémités, un obstacle 12 générateur de tourbillons. un capteur, sensible à l'émission ou au passage des tourbillons, de type quelconque, par exemple incorporé à l'obstacle, est schématiquement représenté en 15. Dans l'exemple choisi, la manchette 11 a une longueur égale à 3D, l'obstacle 12 étant monté dans on plan médian. L'obstacle 12 est à section droite rectangulaire. Sa hauteur d ou dimension transversale. C'est-à-dire la dimension de sa section droite perpendiculaire à l'axe de la conduite, est égale à 0,23D. A l'extrémité de gauche constituant l'entrée de l'écoulement de fluide à mesurer dans la manchette 11, c'est-à-dire à une distance L d'environ 1,5 D en amont de l'obstacle 12, est prévue une gorge 13 dans laquelle vient se loger la périphérie d'une grille 14 montée transversalement à la direction de l'écoulement. Cette grille, représentée fig. 2, est à mailles carrées et est formée par l'assemblage de barreaux ou fils soudés à section carrée, la dimension d'un barreau a étant choisie égale à environ 0,013D et l'espace b entre deux fils consécutifs étant d'environ 0,066D, ce qui correspond à une maille de pas égal à 0,08D environ.

Le montage d'une telle grille en amont de l'obstacle a la distance spécifiée a pour effet de créer au voisinage de l'obstacle un niveau de turbulence du fluide approximativement constant, quelles que soient les conditions de turbulence existant en amont. Il en résulte, en définitive, une stabilisation de l'émission tourbillonnaire de l'obstacle et, par voie de conséquence, l'obtention dans l'étendue de mesure de l'appareil d'une courbe d'erreur pratiquement exempte d'irrégularités.

Il va de soi que l'invention n'est pas limitée au mode de réalisation précédent décrit à titre d'exemple où les valeurs numériques indiquées ont été choisies de manière optimale. La distance L entre la grille et un obstacle déterminé, ainsi que les caractéristiques structurelles de cette grille (a, b) peuvent naturellement prendre d'autres valeurs que celles indiquées, étant entendu que la distance L ne doit pas être choisie trop faible, ni trop grande pour que l'obstacle reste dans la zone d'action efficace de la grille, c'est-à-dire comprise entre D et 5D et que les dimensions (a,b) de cette dernière peuvent varier de l'ordre de 10% tout en restant adaptées aux paramètres (L, d) définissant l'obstacle par rapport à la grille. Les barreaux de la grille ne sont pas non plus nécessairement de section carrée, mais peuvent aussi présenter une section rectangulaire dont le rapport dimension longitudinale (parallèle à l'axe de la conduite) sur dimension transversale a (orthogonale à l'axe de la conduite) est comprise entre 1 et 1,7.

**Revendications**

1. Appareil pour la mesure de débit de fluide du type à émission de tourbillon comportant dans une conduite de diamètre D parcourue par le fluide dans un sens donné, un obstacle (12) générateur de tourbillons précédé en amont par une structure maillée disposée selon une section droite de ladite conduite à une distance L dudit obstacle (12), caractérisé en ce que ladite structure est constituée par une grille (14) formée par des barreaux dont la section droite est rectangulaire ou carrée et présente une dimension transversale (a) orthogonale à l'axe de la conduite et une dimension longitudinale parallèle à l'axe de ladite conduite, ladite dimension transversale (a) étant de l'ordre de 0,013D et le rapport entre lesdites dimensions longitudinale et transversale (a) étant compris entre 1 et 1,7, lesdits barreaux formant des mailles sensiblement carrées dont le pas est de l'ordre de 0,08D, ladite distance L étant comprise entre D et 5D.

2. Appareil selon la revendication 1, caractérisé en ce que ladite distance L est égale à 1,5D.

**Patentansprüche**

1. Gerät zur Messung der Durchsatzleistung eines fluiden Mediums, vom Typ mit Wirbelemission, bei welchem in einer Leitung des Durchmessers D, durch die das fluide Medium in einem gegebenen Sinn strömt, ein Hindernis (12) enthalten ist, welches Wirbel erzeugt und dem stromaufwärtsseitig eine Maschenstruktur vorausgeht, welche gemäß einem senkrechten Querschnitt der Leitung in einem Abstand L von dem Hindernis (12) angeordnet ist, dadurch gekennzeichnet, daß die gennante Struktur aus einem Gitter (14) aus Stäben gebildet ist, deren senkrechter Querschnitt rechtwinklig oder quadratisch ist und eine Querabmessung (a) senkrecht zur Achse der Leitung sowie eine Längsabmessung und der Querabmessung (a) zwischen 1 und 1,7 liegt, wobei die Stäbe ungefähr quadratische Maschen bilden, deren Teilung die Größenordnung von 0,08 D aufweist, und wobei der Abstand L zwischen D und 5D liegt.

2. Gerät nach Anspruch 1, dadurch gekennzeichnet, daß der Abstand L gleich 1,5D ist.

**Claims**

1. A vortex fluid flowmeter comprising, within a conduit having a diameter D and through which a fluid flows in a given direction, an obstacle (12) for generating vortices, and an upstream meshed structure disposed in a cross-section of the said conduit at a distance L from the said obstacle (12), characterised in that the said structure is a grid (14) made of bars, the cross-section of which is rectangular or square in shape and has a transversed dimension (a) perpendicular to the axis of said conduit and a longitudinal dimension parallel to the axis of said conduit, said transverse dimension (a) being of the order of 0.013 D and the ratio of the longitudinal dimension to the transverse dimension (a) being between 1 and 1.7, the said bars forming meshes which are substantially square in shape, the mesh size being about 0.08 D, the said distance L being between D and 5 D.

2. A flowmeter according to claim 1, characterised in that the said distance L is equal to 1.5 D.

# Fig.1

# Fig. 2